# EUROPEAN PATENT APPLICATION

(11) **EP 2 843 885 A1**
(43) Date of publication of application: **04.03.2015**
(21) Application number: 13182158.9
(22) Date of filing: 29.08.2013
(51) Int. Cl.: H04L 12/54

(54) **Apparatus and method for implementing a packet gateway user plane**

(71) Applicant: NTT DoCoMo, Inc., Tokyo (JP)
(72) Inventor: An-De Luca, Xueli, 80687 Munich (DE); Perez Caparros, David, 80687 Munich (DE); Kiess, Wolfgang, 80687 Munich (DE); Khan, Ahiq, 80687 Munich (DE)
(74) Representative: Betten & Resch

(57) **Abstract**

The present invention is directed towards a method and apparatus for implementing an EPC gateway user plane comprising a configurator for configuring a plurality of processing components, each acting as a packet processing unit PPU, each PPU implementing the user plane functionality of a PGW or an integrated PGW and SGW for a certain number of parallel sessions called bearers, a downlink switch which maps IP traffic from an external packet data network PDN to a certain PPU, an uplink switch which maps GPRS tunnel protocol GTP traffic to a certain PPU, said configurator being adapted to configure said PPUs, the uplink switch and the downlink switch such that uplink and downlink traffic pertaining to a specific bearer are routed through a certain PPU.

## Description

### FIELD OF THE INVENTION

The present invention relates to an apparatus and a method for implementing the user plane of Evolved Packet Core (EPC) gateways (PGW-U), in particular for virtualizing the network entity Packet Data Network PDN Gateway (PGW) in the Long Term Evolution (LTE) standard for mobile communication. This invention can also be applied for virtualizing the user plane for the case when PGW and Serving Gateway (SGW) are integrated together.

### BACKGROUND OF THE INVENTION

The PDN Gateway (PGW) and the Serving Gateway (SGW) are critical network entities for the 4G mobile core network, known as Evolved Packet Core (EPC). A PGW provides connectivity to the external Packet Data Networks (PDNs) for the User Equipment (UE), an SGW provides the connectivity to the base stations. PGW and SGW can be implemented as separated devices or within a single physical device. The classical monolithic EPC gateway devices serve several million users at the same time, which is normally implemented by a multi-blade server with dedicated hardware. To achieve carrier-grade availability, normally two-way redundant components are used to prevent service failure. The expenditure to purchase, operate and maintain such a network entity is quite high. In a conventional PGW/SGW, the control plane (C-plane) functions and the user plane (U-plane) functions are collocated within the same entity. For cost reduction purposes, it is the aim of Telco operators to decouple such network functions from dedicated hardware and deploy the functions on low cost commodity hardware, i.e. standard IT servers. However, it is not trivial to decouple the C-plane from the U-plane for such gateway devices, and implement the processing of U-plane packets on low cost hardware due to the limited per server processing capacity.

It would therefore be desirable to implement the data plane processing part of such a PGW using standard IT hardware and achieve the interaction of such data plane processing part with a suited control plane.

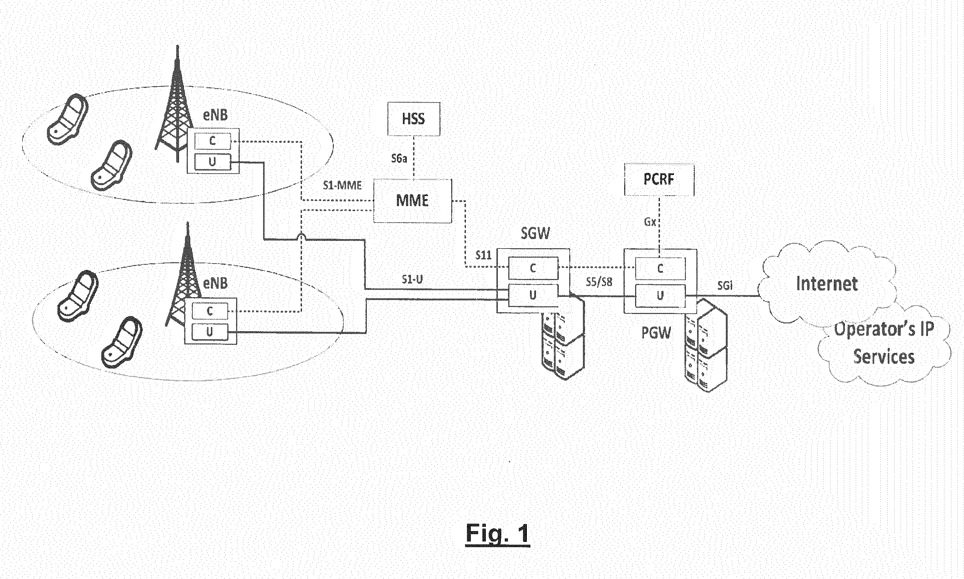

Figure 1 depicts the basic architecture for an Evolved Packet Core (EPC) for Long Term Evolution (LTE) according to the relevant 3GPP standards. An eNodeB (eNB) provides wireless connections between User Equipment (UE) and the network. All eNBs are connected to at least one Mobility Management Entity (MME), which handles LTE related control plane signalling for the UEs attaching to the network, for instance mobility and security functions. The user data plane is handled by Serving Gateway (SGW) and PDN Gateway (PGW). Figure 1 illustrates a separated SGW and PGW system architecture, wherein the S5/S8 interface is defined for interconnecting the SGW and the PGW. The S5 interface is defined for non-roaming scenarios where the SGW is in the home network, or in roaming scenarios where both SGW and PGW are located in the visited network. The S8 interface is a variant of the S5 interface which is used in the roaming scenario with the SGW in the visited network and the PGW in the home network. It is also possible that the SGW and the PGW are collocated or merged such that the S5/S8 interface is an internal interface. For the gateway network entities, there are two kinds of functionalities which are running to support mobile communication: C-plane functions and U-plane functions. C-plane functions are responsible for path, tunnel, and mobility management, and U-plane functions are carrying user data packets through mobile networks and external Packet Data Networks (PDNs). The conventional EPC network entities like SGW and PGW follow an integrated design where the C-plane and U-plane functionalities are coupled in the same physical box.

A method for implementing the EPC control plane in a cloud computing system is addressed in US Patent Application US 2012/0300615 A1. In US 2012/0300615 A1 the EPC of a third generation network has a split architecture where a control plane of the EPC of the 3G network is in a cloud computing system, the cloud computing system including a controller, the controller to execute a plurality of control plane modules, the control plane to communicate with the data plane of the EPC through a control plane protocol. US 2012/0300615 A1 also proposes GTP protocol extensions to the OpenFlow protocol: one defining virtual ports to allow encapsulation and decapsulation and another to allow flow routing using the GTP Tunnel Endpoint Identifier (TEID).

US Patent application US 2010/0291943 A1 proposes a resource pool model for gateway nodes in Global System for Mobile communications (GSM) and 3G, wherein a method and apparatus for selecting a network resource from a plurality of network resources in a communications network are presented. The main focus of US 2010/0291943 A1 is to design a network resource selection entity, which receives a request for a network resource from a terminal, and then retrieves, from at least one network node data relating to the network resources. The solution proposed by US 2010/0291943 A1 monitors key information in the network and changes the response of Domain Name Server (DNS) dynamically to direct a request to a certain network entity. US 2010/0291943 A1 and the present invention is that US 2010/0291943 A1 targets a new method to enable resource pooling by adding a selection node in the enhanced DNS. It does, however, not envisage to use the resource pool model as a way to overcome the performance limitation of IT servers which play a role as PGW in the mobile network.

Further prior art is described in US Patent US 8046430 B2 by L. Andriantsiferana, . M. C. Centemeri, . J. R. lyer, . W.-I. Tsao and K. Viswanath, "Load balancing network access requests", European Patent EP 1512073 B1 by T. Jokiaho, M. Latvala, S. Ni, M. Panhelainen and V.-P. Takala, "Load balancer for multiprocessor platforms", and US Patent US 8428610 B2 by K. Chowdhury, A. Gibbs and R. Koodli, "Dynamic load balancing in a communication network", all of which are focussed on load balancing mechanism design in mobile networks. US 8046430 B2 proposes to use a load balance unit in the mobile network to select a gateway from multiple choices. A local DNS is used to generate a list with identified gateways and the sequence of the gateways in the list can be formed using different techniques, for instance round-robin. The local balance unit is connected to the local DNS to retrieve the possible choice and to select a gateway. EP 1512073 B1 addresses a load balancer multiprocessor platform, which is designed for balancing the control plane traffic of a network element consisting of multiple CPU nodes with a common external IP address in a telecommunication network. In this load balancer, the TEID-C value is identified from the incoming GTP-C message, and it is used to forward the GTP-C message to a CPU node if its value is not equal to zero. Otherwise, a message type value of the GTP-C message is further identified. US 8428610 B2 proposes methods and systems to select a network entity from a resource pool (e.g. MME pool) by using dynamic and real time load factors (such as CPU usage, memory usage, number of sessions active, and rate of incoming data load) that can be shared with other network elements.

### SUMMARY OF THE INVENTION

In one embodiment, an apparatus for implementing a packet gateway user plane (PGW-U) is provided comprising: a configurator for configuring a plurality of processing components, each acting as a packet processing unit PPU, each PPU implementing the user plane functionality of a PGW for a certain number of parallel sessions called bearers, a downlink switch which maps IP traffic from an external packet data network PDN to a certain PPU, an uplink switch which maps GPRS tunnel protocol GTP traffic to a certain PPU, said configurator being adapted to configure said PPUs, the uplink switch and the downlink switch such that uplink and downlink traffic pertaining to a specific bearer are routed through a certain PPU.

This has the benefit that the processing components can be implemented in a cost effective way using standard computer devices with networking capabilities. A further benefit is that the number of processing elements can be scaled to provide a sufficient number of processing resources for handling the packet processing in parallel for a large number of bearers. A further benefit is that uplink and downlink switches can be implemented in a cost effective way since the packet processing, comprising possible packet modification, is performed by standard computer devices and is not done within the switches.

In another embodiment, said downlink switch is an OpenFlow-enabled switch, wherein the downlink switch maps incoming IP traffic to PPUs based on a five-tuple of information, comprising IP source and destination address as well as source and destination port numbers and a protocol ID.

This has the benefit that the downlink switch is a cost-effective component (an ordinary or standard OpenFlow-enabled switch) since it is a standard IP switch, which is also efficient in forwarding packets, since no packet modification is performed by the switch. A further benefit is that the OpenFlow capabilities allow to change the forwarding behaviour of the switch during operation, thus facilitating scalability of the PGW service, since fewer or more computing devices can be configured to perform processing, and also supporting resiliency and update/maintenance functionality of the PGW service if individual processing components may temporarily become unavailable for packet processing.

In another embodiment, the uplink switch is an OpenFlow-enabled switch that reads information from a predetermined area in the GTP header which is within the payload of an incoming IP packet, wherein the packet is forwarded according to said read information.

This has the benefit that a standard OpenFlow-enabled switch requires only a moderately extended functionality to act as an uplink switch, since the extended functionality requires only reading a small section of the payload in every IP packet handled by the switch and in particular packets need not be modified before being forwarded to the destination PPU.

In another embodiment, the information read from a predetermined area in the GTP header is a tunnel endpoint identifier TEID.

This has the benefit that TEID is a compact datum which can be read and handled efficiently by the hardware during further processing. Furthermore the TEID is a unique identifier which makes it a suitable datum to uniquely determine for a given incoming IP packet at the uplink switch the destination PPU onto which the packet is mapped.

In another example, the information is obtained by reading and matching certain number of bits from a certain location of the IP packet payload.

This has the benefit that the information is obtained at a predetermined offset in the payload of the IP packet and in particular in the GTP header and thus can be read without further searching in the payload of the packet.

In another embodiment, the OpenFlow enabled the uplink switch is either enhanced to provide an extension relating to read the GTP header or is capable to read and match a certain number of bits from a certain location within the IP packet payload via bit shifting.

This has the benefit that the extensions of the uplink switch necessary to obtain the information on which the forwarding of IP packets to PPUs is controlled are moderate, require reading of the packet payload and thus could be added to an ordinary OpenFlow-enabled switch in a cost-effective way. Furthermore, such extensions of the switch relating to GTP could be integrated into the OpenFlow interface of the switch and thus become a standard functionality of any OpenFlow-enabled switch.

In another embodiment, the uplink switch is an ordinary OpenFlow switch without extensions relating to GTP, wherein each PPU uses its own unique IP address as source address when sending packets through the uplink switch and wherein GTP traffic received by the uplink switch is directly addressed to said unique IP address of a PPU. In this example, the cluster structure of the PGW-U, including the presence of a plurality of PPUs and their individual IP addresses, is exposed to the interior of the network (mobile core network).

This has the benefit that the uplink switch does not require any extensions relating to GTP, thus can be an ordinary off-the-shelf IP switch which is very cost-effective. The benefit comes however at the price of exposing several different IP addresses of PPUs to the core network, while in other embodiments, the PGW-U is addressed by components of the core network under a single IP address and the distribution and balancing of incoming packets targeting said single IP address to individual PPUs is performed transparently by the uplink switch.

In another embodiment, an uplink switch dedicated to the operation of the PGW-U could be omitted altogether, for example in a case where the switch of the previous example is an ordinary switch of a data center, handling IP traffic of a number of computer devices of the data center that may be unrelated to the operation of the PGW-U.

In another embodiment, the configurator of an apparatus for implementing a PGW-U is configured to perform upon creation of a new bearer the following steps: selecting and assigning an unused TEID for a new GPRS tunnel, selecting a PPU, configuring the packet processing related information at the PPU, for instance, the content of GTP header used for encapsulation/decapsulation, configuring the flow tables of the downlink switch such that incoming traffic (from an external PDN to the evolved packet core network) of the bearer is forwarded to the selected PPU, and configuring the flow tables of the uplink switch such that outgoing GTP traffic, from the evolved packet core network to an external PDN, of the bearer is forwarded to the selected PPU.

This has the benefit that the PPU for processing a bearer is not predetermined and hence selection of a PPU when a bearer is created can occur according to criteria and circumstances that may change dynamically. Moreover, the choice and allocation of a PPU is internal to the PGW-U implementation such that operation of entities communicating from an external PDN to the evolved packet core network is oblivious to the selection of a PPU.

In another embodiment, the configurator of an apparatus for implementing a PGW-U comprises a topology management module configured for recording all bearers currently setup in the U-plane, recording all working PPUs, preferably collecting information about usage and traffic load of the PPUs, creating a new PPU once there are not sufficient PPUs in the resource pool, and preferably deleting a PPU depending on traffic load and usage.

This has the benefit that the information collected by the topology management module facilitates the implementation of non-functional aspects like load-balancing, update or maintenance of individual PPUs. This has the further benefit that the capacity of the PGW-U can be scaled up by additional PPUs in case of high traffic load and usage and reduced in cases of lower traffic load and usage, thus leading to a highly economic and efficient use of computing resources.

In another embodiment, said PPU is implemented by one of the following: a software run on a server; a software run on a virtual machine.

This has the benefit that maintenance and deployment of PPUs can be achieved with infrastructure and procedures that are commonly available in commercial data centres.

In another embodiment, said uplink switch reads the information based on which the GTP packet is forwarded to the PPU without performing a decapsulation of the GTP packet according to the GTP protocol.

This has the benefit that the processing overhead caused by decapsulating the GTP packet is avoided and thus not performed by the uplink switch but rather deferred to the PPU, where processing is more cost-effective.

In another embodiment, each PPU can implement the user plane functionality of a PGW and/or an SGW.

This has the benefit that the architecture of the present invention is general enough to accommodate other type of user plane processing in each PPU, such that the benefits of the present invention may extend not only to the implementation PGW-U but also make the implementation of other services that require user plane processing more flexible, cost effective, and efficient.

In another embodiment, a method for performing the function of a PGW-U is provided, comprising configuring through a configurator a plurality of processing components, each acting as a packet processing unit PPU, each PPU implementing the user plane functionality of a PGW for a certain number of parallel sessions called bearers, a downlink switch which maps IP traffic from an external packet data network PDN to a certain PPU, mapping through an uplink switch GPRS tunnel protocol GTP traffic to a certain PPU, configuring through the configurator said PPUs, the uplink switch and the downlink switch such that uplink and downlink traffic pertaining to a specific bearer are routed through a certain PPU.

Such method provides the same benefits and advantages as set out in previous paragraphs relating to embodiments of an apparatus for implementing a PGW-U.

According to another example, there is provided a computer program comprising computer program code which when being executed by a computer enables said computer to act as an apparatus according to one of the previous embodiments or to perform the method as defined in one of the previous paragraphs.

### BRIEF DESCRIPTION OF THE DRAWINGS

Figure 1 illustrates a schematic diagram of an overview over the basic architecture for LTE.
Figure 2 illustrates a schematic diagram of the system architecture for as decoupled PGW-C and PGW-U.
Figure 3 illustrates a sequence diagram describing the steps of the tunnel establishment procedure.
Figure 4: shows a table illustrating the encapsulation/decapsulation information stored in PPU.
Figure 5 shows a table illustrating the tunnel information maintained at PGW-O.
Figure 6 illustrates a sequence diagram showing the steps of the tunnel termination procedure.
Figure 7 illustrates a schematic diagram of the PGW Orchestrator (PGW-O) high level architecture.
Figure 8 shows a table that specifies the GTP header content according to 3GPP, "General Packet Radio Service (GPRS); GPRS Tunneling Protocol (GTP) across the Gn and Gp interface".
Figure 9 shows an example interface between the PGW-O and PPU.
Figure 10 shows the structure of an OpenFlow command to manage flows according to the Open Network Foundation, "OpenFlow Switch Specification Version 1.3.0 (Wire Protocol 0x04)", 2012.
Figure 11 shows a table illustrating an example of packet filter in a TFT.
Figure 12 shows a table illustrating the standardized QCI characteristics according to 3GPP, "Policy and Charging Control architecture", 2011.
Figure 13 illustrates the main components of an OpenFlow switch according to the Open Network Foundation, "OpenFlow Switch Specification Version 1.3.0 (Wire Protocol 0x04)". 2012.
Figure 14 illustrates an example of a downlink SDF mapping at the PGW-U downlink switch.
Figure 15 illustrates an example of an uplink traffic routing at the PGW-U uplink switch.
Figure 16 illustrates the overall architecture of the first and second implementation option of the PGW.
Figure 17 illustrates the overall architecture of the third implementation option of the PGW.
Figure 18 illustrates the third implementation option for the design of the PUS, which is enabled by using the specific address of each PPU in the outermost transport layer header on the S5-U interface.

### DETAILED DESCRIPTION

At first some abbreviations which are used in the following will be explained.
- CMS: Cloud management system
- eNB: eNodeB
- EPC: Evolved Packet Core
- GPRS: General Packet Radio Service
- GTP: GPRS Tunneling Protocol
- KPI: Key Performance Indicators
- LTE: Long Term Evolution
- MME: Mobility Management Entity Network Configuration
- NCP: Platform
- PCC: Policy and Charging Control
- PDN: Packet Data Network
- PDS: PGW-U Downlink Switch
- PGW: PDN Gateway
- PGW-C: PGW Control plane
- PGW-U: PGW User plane
- PI: Protocol Identifier
- PPU: Packet Processing Units
- PUS: PGW-U Uplink Switch
- QCI: QoS Class Identifier
- SDF: Service Data Flows
- SGW: Serving Gateway
- TEID: Tunnel Endpoint Identifier
- TFT: Traffic Flow Template
- UE: User Equipment

According to one embodiment, there is provided a method and an apparatus for implementing a packet gateway user plane (PGW-U) comprising: a configurator for configuring a plurality of processing components, each acting as a packet processing unit PPU, each PPU implementing the user plane functionality of a PGW for a certain number of parallel sessions called bearers, a downlink switch which maps IP traffic from an external packet data network PDN to a certain PPU, an uplink switch which maps GPRS tunnel protocol GTP traffic to a certain PPU, said configurator being adapted to configure said PPUs, the uplink switch and the downlink switch such that uplink and downlink traffic pertaining to a specific bearer are routed through a certain PPU.

Such an embodiment enables to realize PGW-U plane functionalities via low cost commodity hardware instead of dedicated hardware. The limitation of using commodity hardware for user plane data processing is the performance, for instance the system throughput, as the throughput of a single server is limited to the hardware configuration of this machine. Such an embodiment can use a resource pool model to overcome this limitation. In embodiments described in the following also a communication method and protocol procedure will be described to enable the message exchanging between the PGW-C and PGW-U.

According to one embodiment the processing that a PGW performs on an incoming data plane stream of packets is implemented purely in software on a general purpose processor / server. As this server has performance limitations with the amount of packets and parallel sessions it can process, a cluster of such servers may be used, and each server may be assigned a predefined set of sessions for which it is responsible. In order to hide the internals of the cluster to the outside world and to allow for a fine grained load balancing, an OpenFlow switch together with a controller may act as U-plane load balancer: all U-plane packets to be processed by one of the servers are going through this switch, and appropriate flow forwarding rules are installed that make sure that all packets belonging to a session A are forwarded to the server responsible for this session A. This is achieved by making parallel configurations in the OpenFlow switch and the server whenever a new bearer is to be setup: a controller is responsible for the following tasks: (1) It decides which IT server will be responsible for this bearer (e.g. server M, attached to the uplink switch on port N and downlink switch on port M). (2) It translates the bearer setup command from the PGW control plane entity to the configuration information for the IT server. (3) To route data packets to a certain IT server, it controls one OpenFlow switch for uplink traffic and one for downlink traffic via an OpenFlow interface. Thus, the embodiment implements such a PGW with a combination of software on IT servers and appropriately configured OpenFlow switches and a controller that assigns processing responsibility to one of the servers, and configures both the OpenFlow switch and the IT server appropriately.

According to one embodiment there can be implemented PGW user plane functionalities on commodity hardware instead of using dedicated hardware to provide PGW functions. This can reduce the capital expenditure by buying off-the-shelf equipment and operational expenditure as the system is implemented in software. Furthermore, this enables fine-grained resource management by flexibly adding and removing computing capacity and differentiated service reliability levels by implementing selective standby functions for some of the servers providing PGW user plane functionalities.

Comparing the approach of embodiments of the present invention with prior art approaches like US 2012/0300615 A1, a significant difference lies in the user plane design. While US 2012/0300615 A1 proposes to add GTP support to OpenFlow switches and to implement encapsulation and decapsulation in the switches, embodiments of the present invention provide a solution wherein the user plane can be based on a pool of low cost IT servers that perform this processing. The switches used by embodiments of the present invention can be much simpler as they only make forwarding decisions but do not modify packets. Overall, two types of switches are necessary: The first type corresponds to off-the-shelf unmodified OpenFlow switches and the second type requires only support to take forwarding decisions based on the TEID of an incoming packet. In another embodiment, only unmodified OpenFlow switches are used, at the price of exposing the IT server pool structure to the internal network. Neither of these switches in the various embodiments of this invention needs to modify packets. Thus, while for the system taught by US 2012/0300615 A1, very special hardware in the form of modified OpenFlow switches with tunnelling support is required, the new approach can use a combination of commodity OpenFlow switches and lightly modified OpenFlow switches and commodity IT servers to achieve the goal and functionality of a PGW.

### Decoupled PGW Architecture

The term "decoupling" refers to the decoupling of the control plane and the user plane functionality of the PGW. Embodiments of the invention achieve this kind of decoupling.

The GPRS Tunnelling Protocol (GTP) is the communication protocol used to support General Packet Radio Service (GPRS) within GSM, UMTS and LTE networks. It includes the GTP control plane protocol (GTP-C) and the GTP data transfer protocol (GTP-U). Within the LTE system, GTP-C tunnels signalling messages between SGW and PGW via the S5/S8 interface and GTP-U tunnels user data packets between the SGW and the PGW in the EPC as illustrated in Fig. 1. In an LTE network, the data plane traffic is carried over Service Data Flows (SDFs) and SDFs are bound to bearers based on the policies defined by the operator. A bearer provides a logical transmission channel between a User Equipment (UE) and a PDN. IP traffic is transported via bearers. To ensure the transmission Quality of Service (QoS), a set of QoS parameters is associated with each bearer, indicating the properties of the transmission channel. An SDF passing through the EPC can be identified by a five-tuple: the IP source and destination addresses, the port numbers of source and destination, and the Protocol Identifier (PI). Each bearer is associated with one tunnel, which is identified by a Tunnel Endpoint Identifier (TEID).

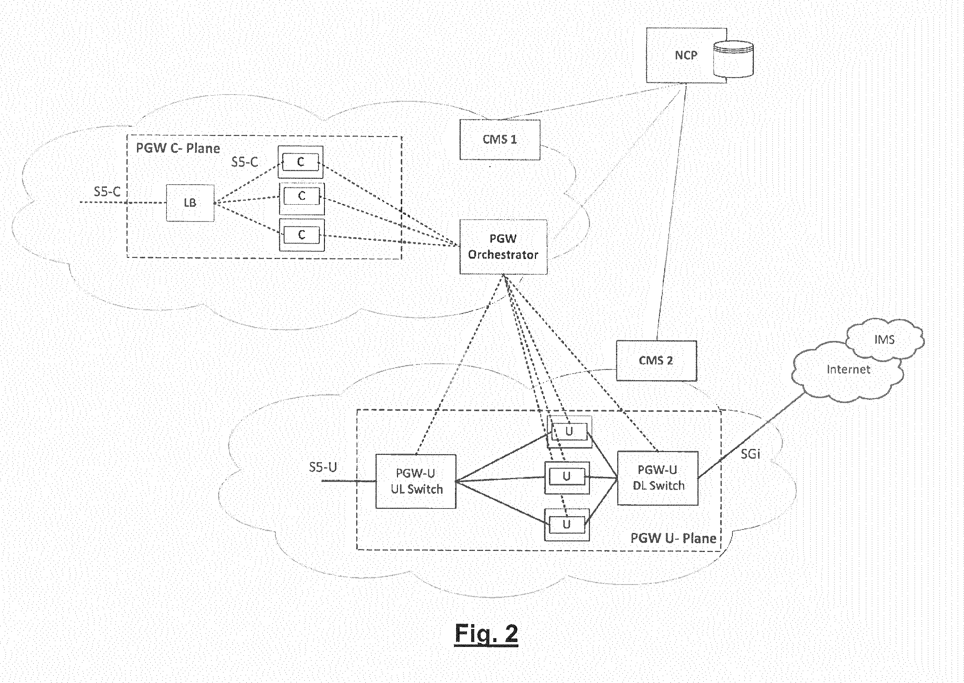

Embodiments described herein are capable to provide a solution how to run the decoupled C/U plane of the PGW on commodity hardware by using virtualization and Software Defined Network (SDN) related technology to increase system elasticity. By using the described approach, the C-plane functions do not need to be collocated with the U-plane functions. Figure 2 illustrates a diagram of one embodiment of the system architecture to enable the decoupled control plane and user plane for a PGW. There are three main functional components in this system diagram: PGW C-plane (PGW-C), PGW Orchestrator (PGW-O), and PGW U-plane (PGW-U). The PGW-C is implemented as software and executed in a data centre. The servers or virtual machines (VM) running the PGW-C software can be scaled up or down according to the control plane traffic load. If there are multiple PGW-C servers or VMs, a Load Balancer (LB) is required to distribute the control plane traffic among them. The PGW-U plane as shown in Figure 2 is a logical entity which is composed by a number of Packet Processing Units (PPUs), a PGW-U Uplink Switch (PUS) and a PGW-U Downlink Switch (PDS). The PPU is the entity that performs U-plane functionalities in the logical PGW-U, which terminates the SGi interface towards the PDN. The PGW-O is also software-based and can be run in a server/VM or in a cluster of servers/VMs. The PGW-O performs GTP tunnel management operations (create tunnel, delete tunnel, modify tunnel) following the instructions from PGW-C. It uses the OpenFlow protocol to configure the flow tables of PUS and PDS accordingly and also configures the PPUs accordingly. The PPUs can be identified by the PGW-O either by private IP or public IP addresses depending on the technology used to setup the communication between the PGW-O and the PPUs. Therefore, the term PPU ID is used to address different PPUs in the resource pool. The detailed functionality of each component will be explained in the following section.

As shown in Figure 2, the Network Configuration Platform (NCP) is a logically centralized platform that orchestrates the deployment of cloud computing resources across several datacenter sites and transport networks. The NCP receives a mobile virtual network request from a mobile network operator. The NCP is responsible of generating a deployment plan that fulfils the received requirements. The deployment plan specifies the functional components of the mobile virtual network and their interconnection. It also includes the initial configuration of the different functional components and the setup sequence. The NCP interacts with one or several Cloud Management Systems (CMS) to execute the deployment plan. The CMS is responsible for managing and controlling the computing and networking resources within the data centre, e.g. the CMS is responsible for adding or removing virtual services by reserving, setting up, and tearing down the necessary resources (e.g. VMs) in the underlying hardware. The CMS is also capable to monitor the resource of its managed data centre. More details about CMS and NCP can also be found in patent application having the application no. EP13168075 filed on May 16, 2013, by the same applicant as the present application.

### Communication Procedure

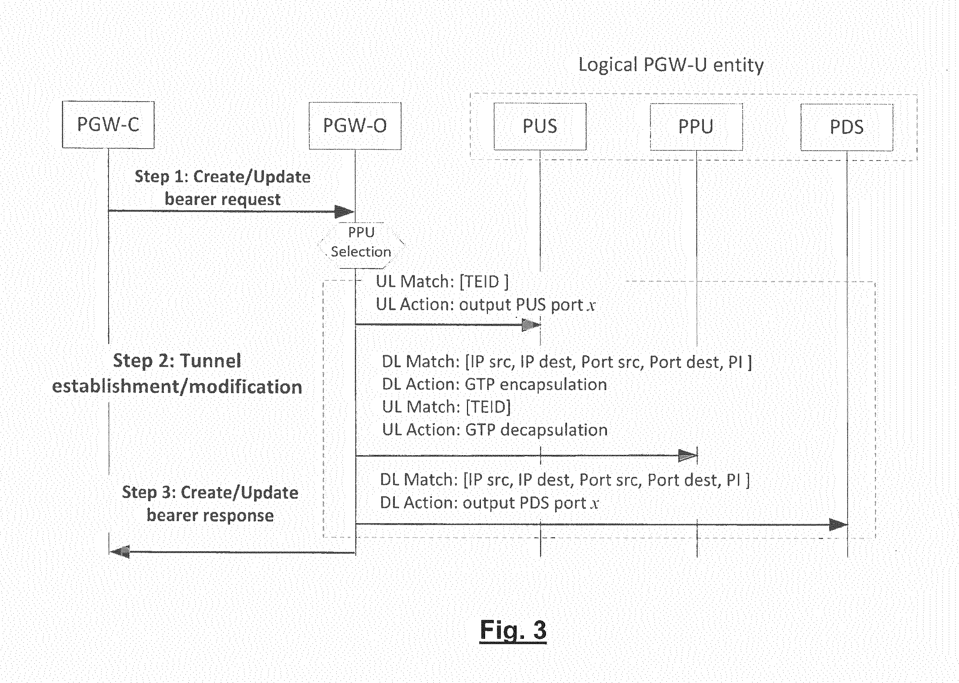

In order to support the decoupled control and user planes of the PGW, the message exchanging procedures used in EPC should be enhanced based on the specification proposed by 3GPP TS 23.401: "Evolved Universal Terrestrial Radio Access (E-UTRA) and Evolved Universal Terrestrial Radio Access Network (E-UTRAN)".. The PGW terminates the SGi interface towards the PDN. The control plane of PGW involves in the bearer management activities, for instance create, update or delete bearers. For instance, in the Attach procedure, which is the process that a UE registers with the mobile network to receive services, a default bearer is established. One or multiple additional dedicated bearers could also be triggered during this procedure. The gateway selection is done at the MME, which selects the SGW and PGW-C. Once the PGW-C receives any bearer related message, for instance Create Session/Bearer Request, Modify Bearer Request, it first performs an IP-CAN Session Establishment procedure, according to 3GPP, "Policy and Charging Control Architecture", 2011 to define the Policy and Charging Control (PCC) rules for the UE, and then the Tunnel Establishment/Modification procedure as illustrated in Figure 3 is triggered to execute on the system architecture on which the present invention is based, which includes the following major steps:

Step 1: The PGW-C entity sends a Create/Update Bearer Request message to the PGW-O. Within this message, the IP address and the TEID of PGW-C, the IP and the TEID of the SGW-U and SGW-C (for the case of decoupled PGW and SGW), and the bearer ID are included. It is optional to include the new/updated packet filter or include the Traffic Flow Template (TFT), which is a set of all packet filters associated with a certain bearer. TFT filtering rules use a five-tuple (i.e. IP address and port number of the source and destination, and PI) to map SDFs to bearers with appropriate QoS treatments.

Step 2: After the PGW-O receives the Create/Update Bearer Request message from the PGW-C entity, the following sub-steps are executed: First, the PPU selection function is executed to select a PPU and assign a S5/S8 TEID to process the U-plane data packets from this bearer. The PPU selection module in the PGW-O could maintain multiple PPU selection algorithms, the details of which are explained in section "PGW Orchestrator (PGW-O)", for instance a PPU could be selected according to operator's preference, e.g. its current resource usage (e.g. CPU, RAM, etc.) or service related parameters (e.g. the number of bearers maintained in the PPU, etc.).

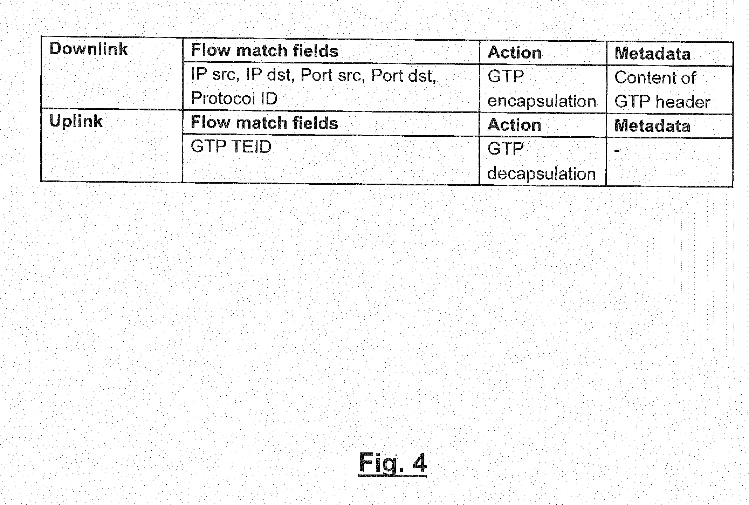

Second, the PGW-O sets up a path which goes through the PUS, the selected PPU and the PDS. This path is identified by the following information: IP of the logical PGW-U entity, ID of the PPU, the ingress port (Port_in) and egress port (Port_out) of PDS and PUS. The above information is maintained in the PGW-O database once the PDS, PUS and PPUs are attached to the PGW-O. Therefore, once a PPU is selected, the internal path is also fixed and the PGW-O needs to setup the forwarding rules (with matching rules and corresponding actions) for the PDS and PUS to route the traffic from this bearer to the selected PPU. Moreover, the PGW-O also needs to define the processing rules for the PPU to process the traffic:
- PUS:
   To setup a new flow on the U-plane, an entry will be added in the flow table of the PUS by the PGW-O. The main function of the PUS is to route the uplink traffic to the appropriate PPUs. The TEID is used as the flow match field in the PUS for the uplink traffic. If the TEID of a data packet *t* is matched with a certain entry of the flow table maintained in the PUS, the corresponding action "forwarding the packet to PUS port *x*" is executed. Port x is connected to the PPU which further processes the data packets with TEID *t.* The downlink traffic is not necessary to pass through the PUS.
- PDS:
   To setup a new flow on the U-plane, an entry will be added in the flow table of the PDS by the PGW-O. The main function of the PDS is to route the downlink traffic to the appropriate PPUs. Five-tuple information [IP src, IP dest, Port src, Port dest, PI] is used as the flow match field in the PDS for the downlink traffic. If the five-tuple information of an incoming packet is matched with a certain entry of the flow table, the corresponding action "forwarding the packet to PDS port *z*" is executed. The uplink traffic is not necessary to pass through the PDS.
- PPU:
   The processing rules which are used by the PPUs for per-flow based GTP encapsulation/decapsulation are maintained in the PPUs as illustrated in the table shown in Figure 4. The GTP header contents are decided by the PGW-O according to the requested bearer information.

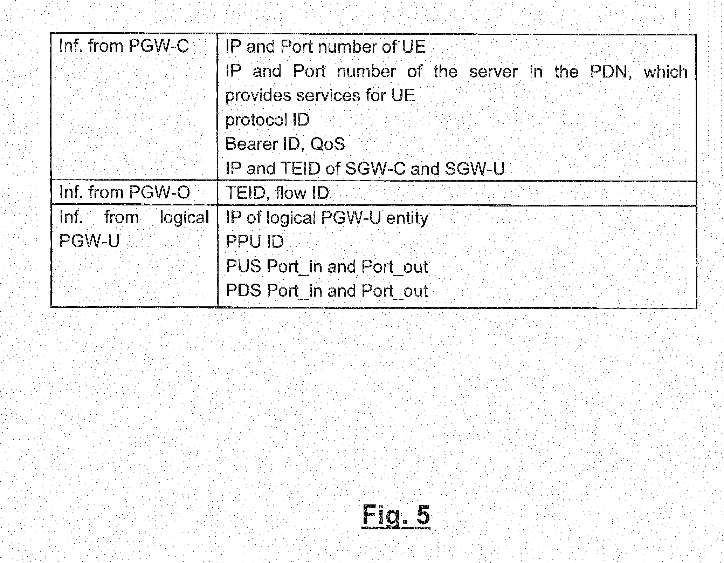

Third, a table as shown in Fig. 5 is maintained by the PGW-O to record the active flow and corresponding bearer context information. Once a flow is setup at the U-plane for a new bearer, an entry is created in the table and a unique ID is assigned for the flow setup at the U-plane. The bearer context information recorded in the table includes:
- the bearer information generated by the PGW-C entity, i.e. the IP and port number of the UE, the IP and the port number of the service server (if applicable, otherwise using wildcard), protocol ID, bear ID, and corresponding QoS treatment for this bearer;
- the tunnel information generated by the logical PGW-U entity, i.e. TEID, flow ID;
- the information about the internal path within the logical PGW-U entity generated by the PGW-O as listed in the table;
- for the case of decoupled PGW and SGW, the information about the SGW, i.e.
   the IP address TEID of SGW-U and SGW-C, which are used to route the downlink GTP traffic from PGW-U to SGW-U.

Step 3: A Create Bearer Response message is sent from the PGW-O to the PGW-C entity with the IP address of the logical PGW-U and the TEID of the user plane of PGW.

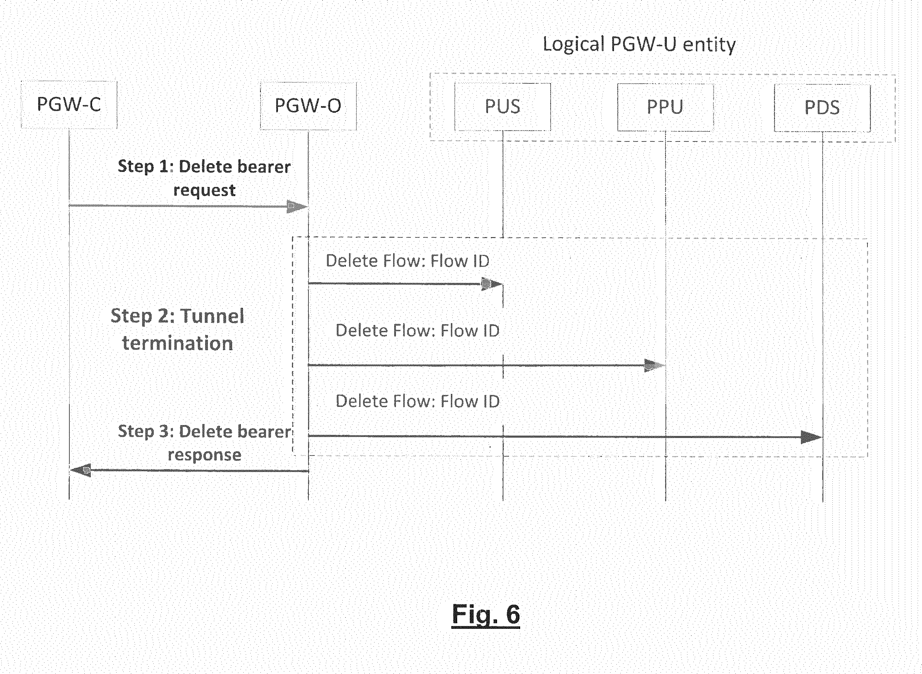

The Detach process removes bearers and clears the related states. After the PGW-C receives the Delete Bearer Request message from the SGW, the PGW-C entity employs a PCEF initiated IP-CAN Session Termination procedure according to 3GPP: "Policy and Charging Control architecture", 2011, and sends a Delete Bearer Request message (which includes the bearer ID) to the PGW-O as shown in Figure 6. Once the PGW-O receives a Delete Bearer Request message from the PGW-C entity, it looks up the Flow ID according to the bearer ID obtained from the Delete Bearer Request message and generates the delete flow command with the corresponding Flow ID to release the U-plane resource, after which, the PGW-O deletes the entry of this bearer from Figure 5. In the end, a Delete Bearer Response message is sent back to the PGW-C entity.

### PGW Orchestrator (PGW-O)

The PGW-O is the core control component of the entire U-plane (it could therefore also be named "PGW controller"), which manages the tunnels on the U-plane, e.g. it creates, modifies, and deletes the tunnels. Software Defined Network (SDN) related technology, e.g. OpenFlow, is applied in this system in order to dynamically manage the tunnels on the U-plane. The PGW-O can be implemented based on an existing OpenFlow controller with modifications, or it can be a controller that understands the OpenFlow protocol.

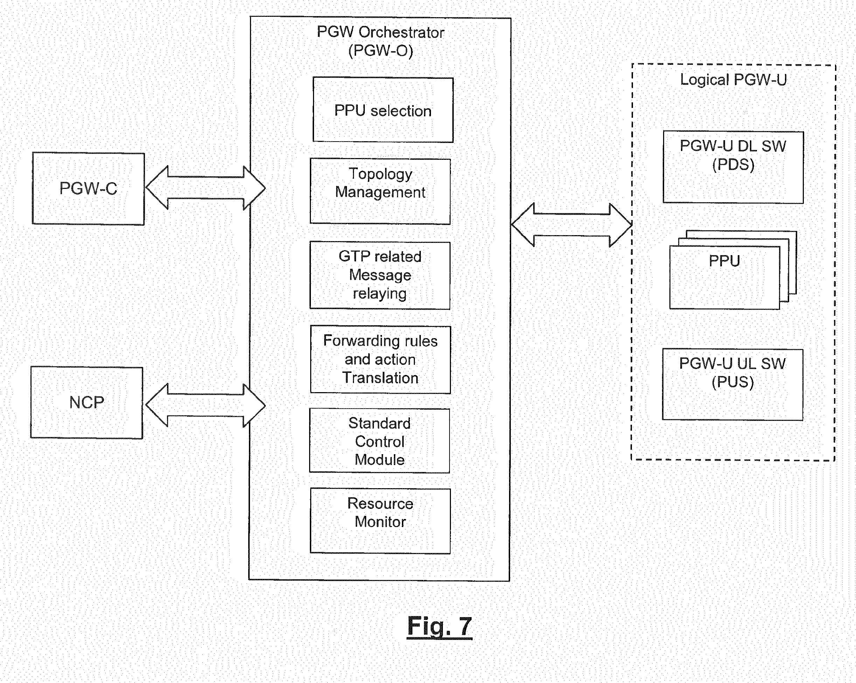

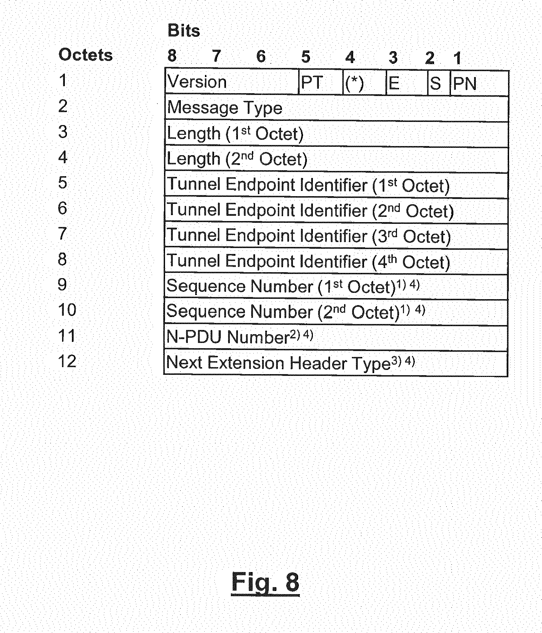

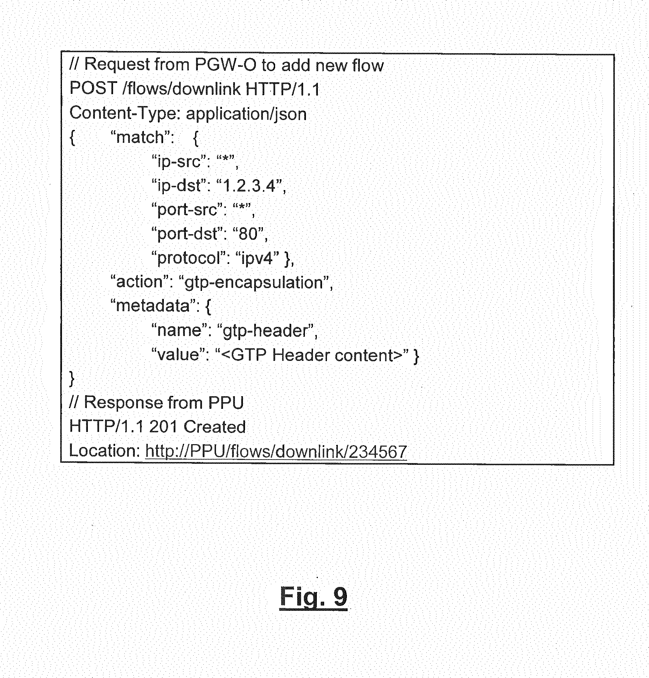

The PGW-O orchestrates (or controls) the U-plane resources and enables the communication between the PGW-C and the logical PGW-U via the interfaces between different network entities to the PGW-O as shown in Figure 7. The main interfaces between the PGW-O and the other network entities are described as follows:
- Interface between the PGW-C entity and PGW-O:
   This interface supports the communication between the PGW-C and the PGW-O. The messages supported by this interface include:
      Create/Update/Delete Bearer Request and Response.
- Interface between NCP and the PGW-O:
   This interface is used to support the communication between the NCP and the PGW-O, for instance, to support auto scaling features as mentioned later in section "Resource Pool Model".
- Interface between PGW-O and PDS:
   This is an OpenFlow interface that is used to configure the flow table of the PDS.
- Interface between PGW-O and PUS:
   This is an OpenFlow interface enhanced with GTP extension that is used to configure the flow table of the PUS. The GTP extension is required because of the following reason: The PUS uses a TEID as the flow match filed (which is explained later in section "PGW-U Uplink Switch"), which is not supported by OpenFlow V 1.3.0 according to the Open Network Foundation, "OpenFlow Switch Specification Version 1.3.0 (Wire Protocol 0x04 )", 2012 (referred to as the "OpenFlow Switch Specification" hereinafter). Therefore, this interface requires a GTP extension of the current version of the OpenFlow protocol. For the implementation of an extension of OpenFlow reference can be made to US 2012/0300615 A1.
- Interface between PGW-O and PPU:
   The main task of this interface is to configure the encapsulation/decapsulation related parameters, which include the matching rules (translated from the TFT) that identify a user plane flow in the downlink and the content of the GTP header that will be applied to packets matching these rules (as shown in Figure 8). The TEID is used to match the user plane flow for the uplink traffic. Identifying traffic flows is also important for charging purposes. Besides, the interface is also used to update the PGW-O about the logical PGW-U internal topology (for instance when a new PPU is launched in the resource pool and it is wired up with the PDS and PUS), and to transmit flow-based statistics from the PPUs to the PGW-O. This interface can be implemented by any existing communication protocol, e.g. IP. One possible option is to implement it as a HTTP REST interface. An example of adding a new bearer using an HTTP REST interface is shown in Figure 9. The PPU also collects per flow traffic statistics. This traffic information is forwarded to PGW-C for charging purposes via this interface.

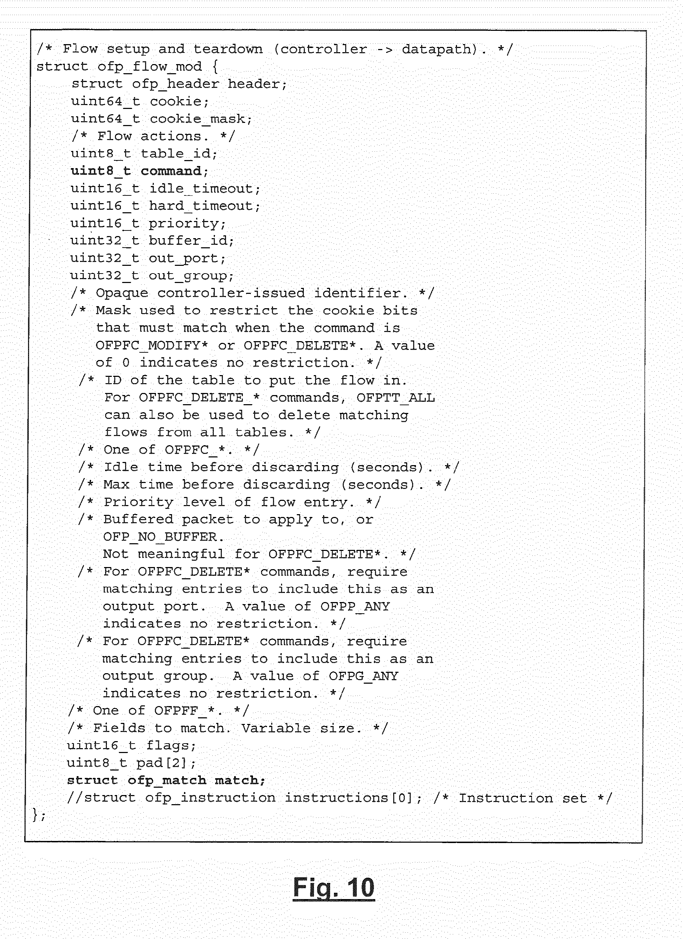

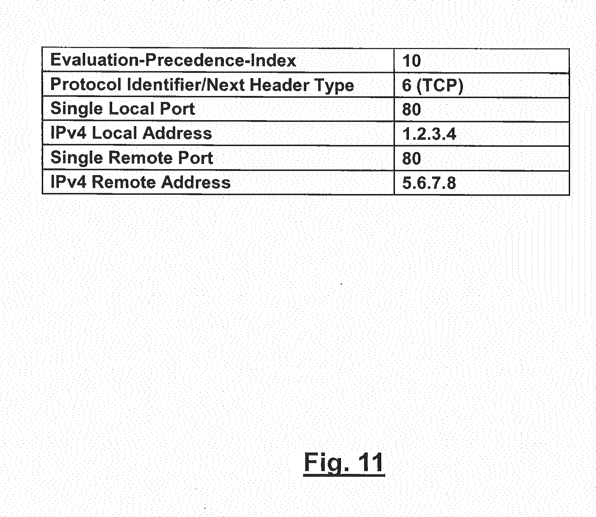

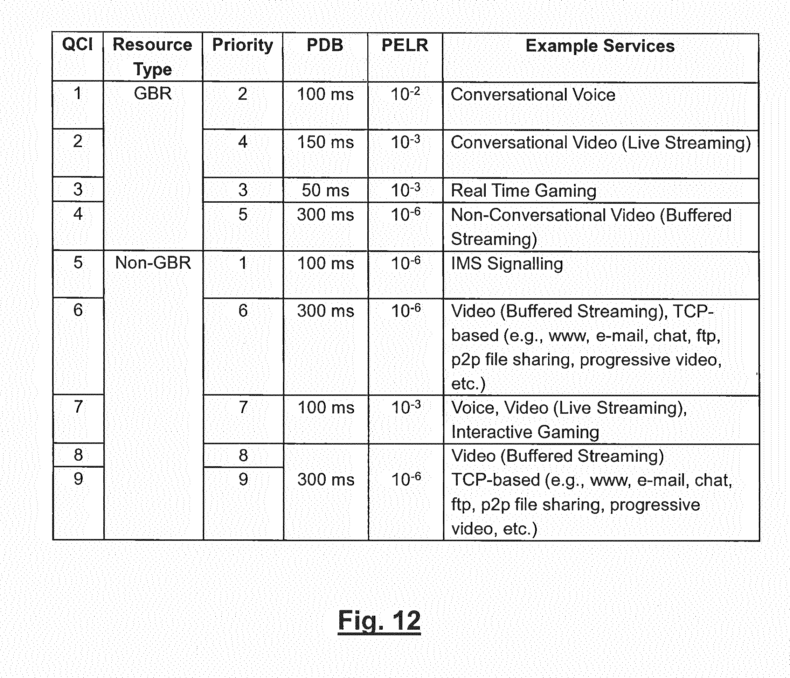

The major functional modules of the PGW-O as depicted in Figure 7 are explained as follows:
- Topology management: The topology management module provides a record of all the working PPUs, and all the bearers currently setup in the U-plane. The individual information maintained in this module for each PPU used by the PGW-U selection includes: the logical PGW-U entity IP address, the PPU ID, the bearers maintained in this PPU and their corresponding QoS characteristics. The above information is updated once a new bearer is added to a PPU. The real-time information like the CPU, RAM usage and the traffic load is collected via the interface between the PGW-O and the PPUs.
- PPU selection: This module is used by the PGW-O to select a PPU as the serving entity to encapsulate the data packets from the external PDN, or decapsulate the GTP packets from the EPC. Multiple PGW-U entity selection algorithms can be implemented in this module and they are designed according to the operator's preference and the properties of the PPUs. According to the bearers which are served at the PPUs, there are two kinds of PPU pool formation criteria: homogeneous PPUs and heterogeneous PPUs:
   - Policy 1: Homogeneous PPUs: All the PPUs in the resource pool have the same properties, which mean that selecting one PPU to serve a bearer does not make any difference than selecting another one in the resource pool. The PGW-O maintains the performance indicators of each PPU (such as CPU, RAM, traffic load, etc.), and it can select a PPU based on this information. One option is to select the PPU with the currently lowest resource usage ratio, thus the PGW-O provides load balancing for the U-plane. Another option is to select the one with the highest resource usage among the PPUs with sufficient free capacity, thus concentrating traffic and achieving a high utilization.
   - Policy 2: Heterogeneous PPUs: In this resource pool configuration scenario, it is assumed that not all the PPUs are of a similar nature. Examples are PPUs that provide a certain QoS, for instance some PPUs are lightly loaded to provide a guaranteed delay, or some PPUs are configured with 1+1 hot standby backup protection to achieve high reliability, etc. QoS Class Identifier (QCI) can be used as an example parameter to characterize the PPUs. As indicated in Figure 12, QCI is used to determine the U-plane traffic treatment, e.g. packet error loss rate (PELR), packet delay budget (PDB). When a new PPU is launched, e.g. during the initialization phase to setup the logical PGW-U entity or during the auto-scaling procedure as explained later in section "Resource Pool Model", the QCI of running services in this PPU is pre-assigned by the Network Configuration Platform (NCP), hence different PPUs are only used to serve a certain kind of services, e.g. web browsing, voice, video, gaming, etc. Once a Create Bearer Request message is received by the PGW-O, only the PPUs with the suitable QCI characteristic are considered as the targeted choices. In this way, the bearers with the same QCI are maintained in the same PPU. Once a bearer with a new type of QCI is requested, a PPU is launched to serve the services with this QCI. In this way, fine-grained resource allocation and management can be applied for the U-plane traffic, for instance, the PPUs with different resiliency requirements can be treated separately.
- Standard control module: In one embodiment, the PGW-O configures the flow tables of PDS via an OpenFlow interface and the flow tables of PUS via a GTP enhanced OpenFlow interface. The PGW-O uses the ofp_flow_mod command to manage flows in the PDS and PUS forwarding table. The structure of the ofp_flow_mod command is shown in Figure 10, which is defined in the OpenFlow Specification. It contains the header fields to match and the actions to be applied to the packets. For example, an SDF can be uniquely mapped to a certain PPU at the PDS by using ofp_match. The ofp_match structure for the PDS (which will be explained later in detail in section "PGW-U Downlink Switch") contains the matching fields OXM_OF_IPV4_SRC, OXM_OF_IPV4_DST, OXM_OF_TCP_SRC, OXM_OF_TCP_DST, OXM_OF_ETH_TYPE. The corresponding action after matching could be defined as "output to PDS port x", which is the port connecting to the PPU. In order to add a flow entry, command is set to OFPFC_ADD. The action type is set to OFPAT_OUTPUT with the number of the desired switch output port as value. Being different from the PDS, the matching field for the PUS is the TEIDs, which will be explained later in section "PGW-U Downlink Switch".
- Forwarding rules and action translation: After a PPU is selected by the PGW-O to setup a tunnel with an associated S5/S8 TEID, this module is triggered to form the matching rules and actions for each logical PGW-U entity component (i.e. PDS, PPUs, PUS) according to the bearer-related information. One of the major functions of the PGW-U is to map SDFs to bearers for the downlink traffic. The PGW-O receives the TFT for the downlink traffic from the PGW-C. An example TFT with one packet filter is shown in Figure 11. In this example, the defined packet filter is used to classify web browsing traffic. The PGW-O translates the TFT to the following information that is required to create a new OpenFlow flow in the PDS:
   - Depending on the PPU selection policy, TFT parameter values can be required to define the action associated to the flow (e.g. selecting a PPU according to the QCI). For example, these values might determine the output port of the PDS for the flow (action = output port x).
   - Flow priority shall be set to the value provided within the TFT packet filter parameter "Evaluation-Precedence-Index". This value can also be adapted to the priority scheme used in the forwarding table of the PDS, as long as it respects the same precedence order.
   - The source IP matching field (OXM_OF_IPV4_SRC) shall be derived from the TFT packet filter parameter "IPv4 remote address".
   - The destination IP matching field (OXM_OF_IPV4_DST) shall be derived from the TFT packet filter parameter "IPv4 local address".
   - The TFT packet filter parameter "Protocol Identifier/Next Header Type" shall be used to select the appropriate matching field for ports. In this case, the protocol is TCP, so the matching field to be used in OpenFlow for the source port is OXM_OF_TCP_SRC. Its value shall be derived from the TFT packet filter parameter "Single remote port".
   - The matching field to be used in OpenFlow for the destination port is OXM_OF_TCP_DST. Its value shall be derived from the TFT packet filter parameter "Single local port".
   - OXM_OF_ETH_TYPE shall be set to 0x0800, which is the Ethernet Type value for IPv4 protocol.
   - The rest of matching fields in OpenFlow shall be set to "any" in the flow configuration.
- GTP related message relaying: The PGW-O forwards the encapsulation and decapsulation related information to the PPUs, i.e. the UE's IP address and port number, the service server's IP address and port number, protocol ID, and GTP headers (header flags and TEID).
- Resource monitor: This module is used to monitor and record the resource usage information from logical PGW-U entity.

### Logical PGW-U Entity

According to embodiments of the invention the user plane processing part of a PGW is implemented by the modular logical PGW-U entity. The job of a PGW is to serve as demarcation point between external IP networks and the mobile operator's network and tunnel user data to the SGW. Among others, it is also responsible for packet filtering, rate shaping and marking packets according to QoS rules.

Instead of using classical monolithic PGW servers that use special hardware for this task, the described embodiments use a pool of low cost commercial-off-the-shelf (COTS) servers called "PPUs" that implement the necessary processing of data plane packets purely in software together with dedicated load balancing devices that make the pool appear as single entity to the outside. As shown in Figure 2, a logical PGW-U entity contains three main components:
(1) Packet Processing Units (PPUs)
(2) PGW-U Uplink Switch (PUS)
(3) PGW-U Downlink Switch (PDS)

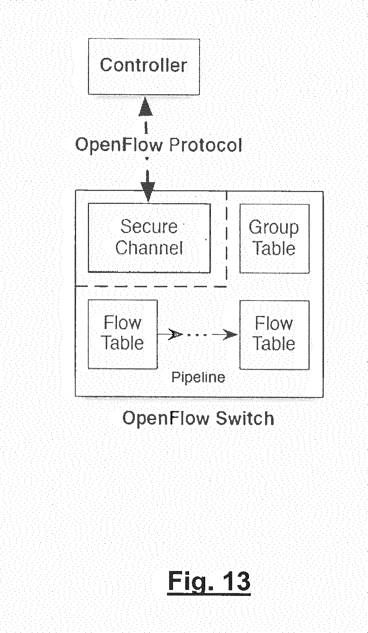

For PUS and PDS that serve as load balancers, embodiments may use OpenFlow switches. The OpenFlow controller manages the OpenFlow switches via secured channels using OpenFlow protocol as shown in Figure 13.

### Packet Processing Units (PPUs)

As stated above, in some embodiments of this inventions, a PPU implements the user plane functionality of a PGW, among which, the main functionality is thus to handle incoming IP traffic. Each packet for a UE has to pass a packet filter for DPI (deep packet inspection), undergo rate shaping and QoS marking to allow for an appropriate forwarding of the packet in the network according to predefined QoS rules.

In another embodiment of this invention, for the case that the SGW and PGW are considered to be integrated together, the PPUs could also have the implementations of the functions of SGW-U defined in the EPC architecture, for instance, forwarding data packets towards the base stations, serving as anchor point for inter eNB mobility, packet buffering in the downlink during paging, or reproduction of user traffic for lawful interception.

To this end, the PPUs, encapsulate downlink IP packets (coming from external networks) with GTP headers and decapsulate the GTP packets from the EPC (i.e. uplink packets transmitted by the UE). The necessary configuration information for these tasks, like GTP header flag and TEID are determined and sent to the PPU via the PGW-O. The PPUs are also responsible for uplink and downlink service level charging. Therefore, the statistic information like uplink and downlink traffic load, flow usage duration will be sent back to PGW-C via PGW-O.

### Resource Pool Model

### Resource pool:

The overall architecture of the proposed logical PGW-U entity follows a resource pool or clustering model: a number of processing components (the PPUs) are jointly processing the incoming traffic, and the PUS and PDS serve as entry point for traffic to this cluster. Embodiments described herein are based on this architecture because a single IT server has limits in its processing capabilities due to the speed of its CPU or the amount of installed RAM. Thus, a single PPU is able to process the packets of a certain number of parallel sessions-- called 'bearers'-- and hold the respective state necessary for this processing. But if more bearers are to be processed, this is not possible with only this server. To allow for such a scaling, the PUS and PDS are used together, via the control from the PGW-O, as load balancers. With the described embodiments, the PUS and especially the PDS are able to switch incoming packets to the PPU responsible for this packet, i.e. the PPU which holds the state of the bearer to which the packet belongs to.
The number of servers in the resource pool could be static or dynamic. For instance, all the servers in the pool could be in active status all the time, or could be launched or shut down according to the traffic load, which is referred as the auto scaling feature of the resource pool. This is considered as an extension, which could be implemented for the resource pool to improve resource utilization ratio and system elasticity, but it is not a compulsory feature.

### Auto scaling of PPUs:

The PPUs are implemented as software, which could be run for instance on an IT server directly or in a Virtual Machine (VM). Therefore, auto scaling feature can be introduced to improve the flexibility of the resource management scheme in virtualized PGW architecture. The auto scaling feature can be provided by the Cloud Management System (CMS) together with the Network Configuration Platform (NCP). The NCP monitors the status of the PPUs by reading the values of selected Key Performance Indicators (KPI), which could be:
- Performance related parameters of a PPU, which could be provided by the CMS, e.g. CPU usage, RAM usage, or current traffic load of a VM or a server.
- Service-related parameters, e.g. the number of served subscribers or the number of tunnels maintained in the PPU.

The auto scaling policies and corresponding KPIs are defined in the deployment template by the NCP, which is used to setup the logical PGW-U entity at the first place.

According to section "PGW Orchestrator", the PPUs in the resource pool can be homogeneous or heterogeneous. For the homogeneous PPU scenario, one scaling policy can be applied to the entire resource pool. The NCP triggers the corresponding auto scaling policy when a KPI reaches a certain value (e.g. "launch one additional VM if the average CPU usage in the pool is higher than 70%"). For the heterogeneous PPU scenario, a PPU is assigned to run the bearers with a predefined QoS characteristic, which is a service content based resource allocation mechanism. Therefore, the NCP should pre-set the service QCI that a PPU is serving for (e.g. PPU for voice, PPU for video, etc.). The PPUs with the same QCI are considered in the same PPU group, for instance voice group, video group, etc. Auto scaling is triggered based on the KPI of a certain PPU groups. Different scaling policies could be applied to different PPU groups.
In order to execute the auto scaling decision and the corresponding reconfiguration of the logical PGW-U entity, NCP interacts with the CMS. Once a new PPU is launched, it is wired up with the PDS and PDS by the CMS. The PGW-O will be updated and it will create a new entry for the new launched PPUs.

### TEID Assignment:

The Tunnel Endpoint ID (TEID) is used to indicate which tunnel a data packet belongs to and it is present in the GTP header. Different TEID assignment algorithm can be applied here. For instance, the entire PPU resource pool could share a range of TEIDs. The PGW-O selects and assigns an unused TEID for a new tunnel. It is also optional that, each PPU has a predefined range of TEIDs, which is not overlapped between one PPU and the other PPUs. Once a PPU is launched, there is a TEID range associated with this PPU. Once the PGW-O selects a PPU to serve a new bearer, it only selects an unused TEID from the TEID range which belongs to this PPU.

### Resiliency provisioning:

Implementing the U-plane functions based on resource pool model provides more flexible solutions for resilience provisioning compared to the monolithic PGW. If a PPU experiences failure, another PPU can be launched and takes over the tasks from the failed PPU. Compared to the monolithic PGW, the PPU is light weight, hence it also requires less preparation time for launching. Furthermore, fine grained resiliency provisioning can be done at the granularity of the PPU. For instance in the heterogeneous PPU resource pool scenario, the PPUs with high QoS requirements in terms of availability can be configured to run in a high resiliency configuration. This means that for each working PPU, a hot standby PPU is launched and synchronized states are maintained. Upon a failure of the working PPU, the hot standby PPU can immediately take over the processing of incoming packets, controlled by the orchestrator that performs the necessary update of the forwarding rule in the PDS and PDS. This realizes a 1+1 protection solution.
For the PPUs which handle low QoS requirement services, resiliency solution like M+1, M+N protection or no protection can be applied to the working PPUs.

### PGW-U Downlink Switch

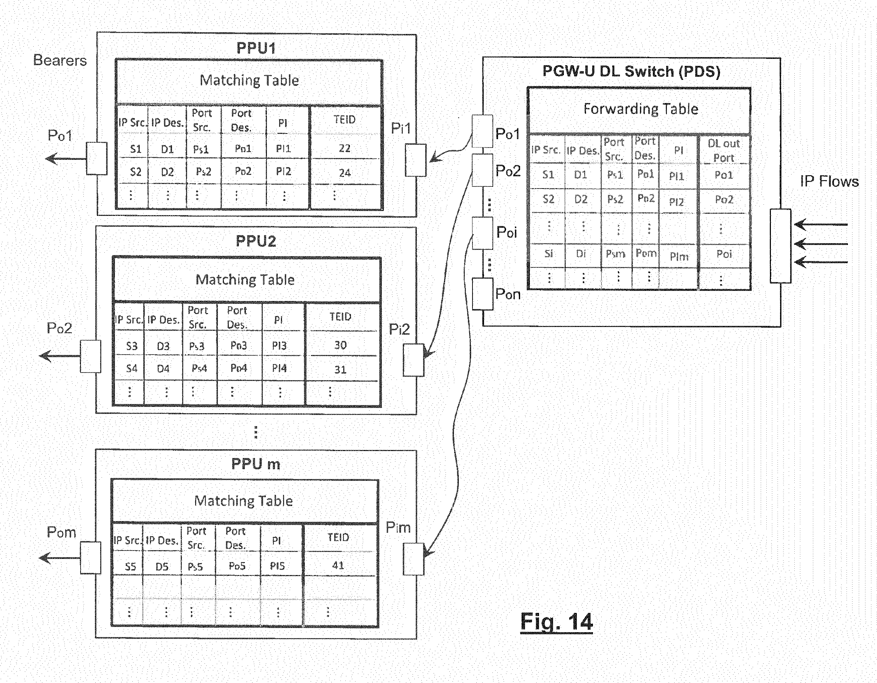

As explained above, the main functionality of the PGW-U Downlink Switch (PDS) is to route downlink packets from external PDNs to a certain PPU. To this end, the present invention may implement the PDS based on an OpenFlow switch, which is controlled by the PGW-O. The PGW-O sends the matching and action rules by using the OpenFlow protocol to the PDS, which are then used to configure the forwarding table maintained at the PDS. The important point here is to configure the PDS's forwarding such that all packets that belong to a session A handled by a PPU M are forwarded to this PPU M. In order to do this, PGW-O extracts from the SDF the 5-tuple header fields (IP addresses and port numbers for both source and destination together with the protocol ID) needed to classify the incoming IP packets and uses this information to configure the PDS. A downlink SDF mapping at the PDS is illustrated in Figure 14. Hence, the flow table maintained at the PDS is configured according to the information contained in the TFTs, without actually implementing the GTP protocol or similar extensions. If an incoming packet does not match the forwarding rules, it will be dropped by PDS or sent back to the PGW-O.

### PGW-U Uplink Switch

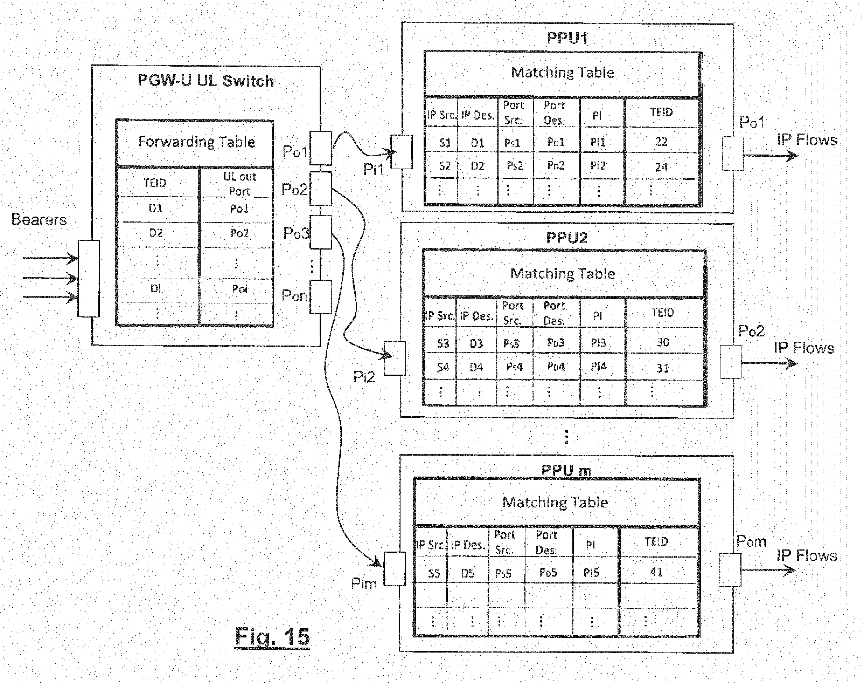

In one embodiment, the main functionality of the PGW-U Uplink Switch (PUS) is to dispatch the uplink traffic from SGW to different PPUs. In another embodiment for the case that SGW and PGW are integrated together, the main functionality of the PUS is to dispatch uplink traffic from the base stations to the different PPUs.
The PUS is implemented based on an OpenFlow switch, which is controlled by the PGW Controller. However compared to the traffic handled by the PDS, the uplink data packets received by the PUS are GTP packets, i.e. packets with a GTP header that contain the information to which bearer the packet belongs to. In order to direct the traffic to the correct PPU, the PUS should be able to handle GTP header. The PUS can be implemented in two different ways:
1. Extend an OpenFlow Switch with GTP READ capability: The PUS fetches the TEID from a GTP header and directs the traffic according to the TEIDs, for instance as shown in Figure 15. Note that this requires the PUS to understand the GTP protocol.
2. The PUS has bit-shifting capability in order to read certain information from the UE IP packet (the five tuple that is also used by the PDS for its forwarding decisions): The PUS reads the five-tuple information (i.e. IP and the port number for the source and the destination, and protocol ID) from the payload of the GTP packet, according to which, the PUS distributes the traffic. Note that this requires the ability to read information from a certain area within a packet. This could be for example implemented by an n-bit shift of the matching, which is novel feature that to the best of our knowledge has not been proposed yet.

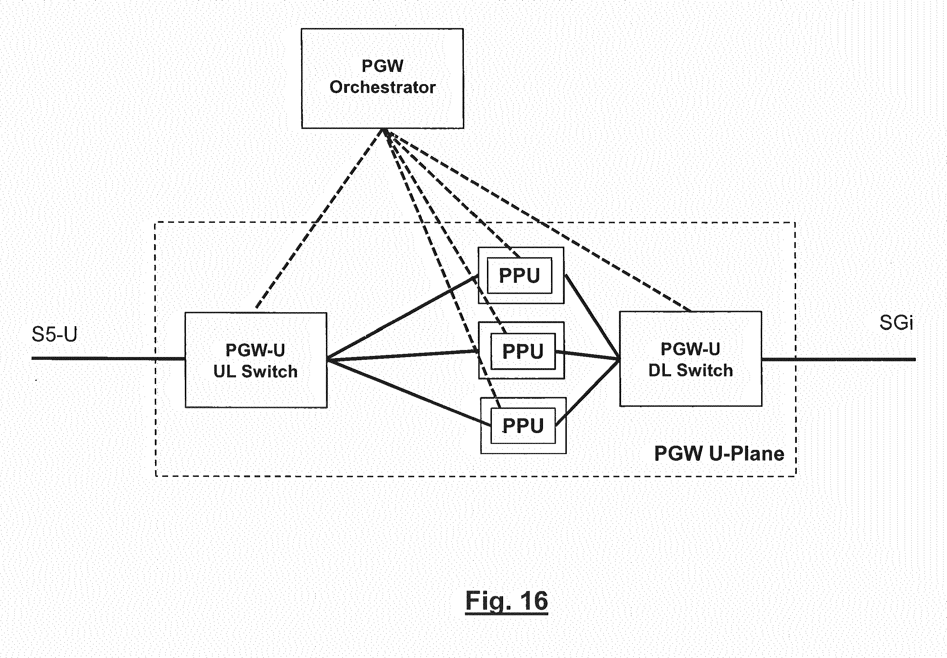

Figure 15 shows an example uplink traffic routing at the PUS. Furthermore, a GTP related extension of OpenFlow is also described in US 2012/0300615 A1. The overall architecture for these two options is shown in Figure 16.

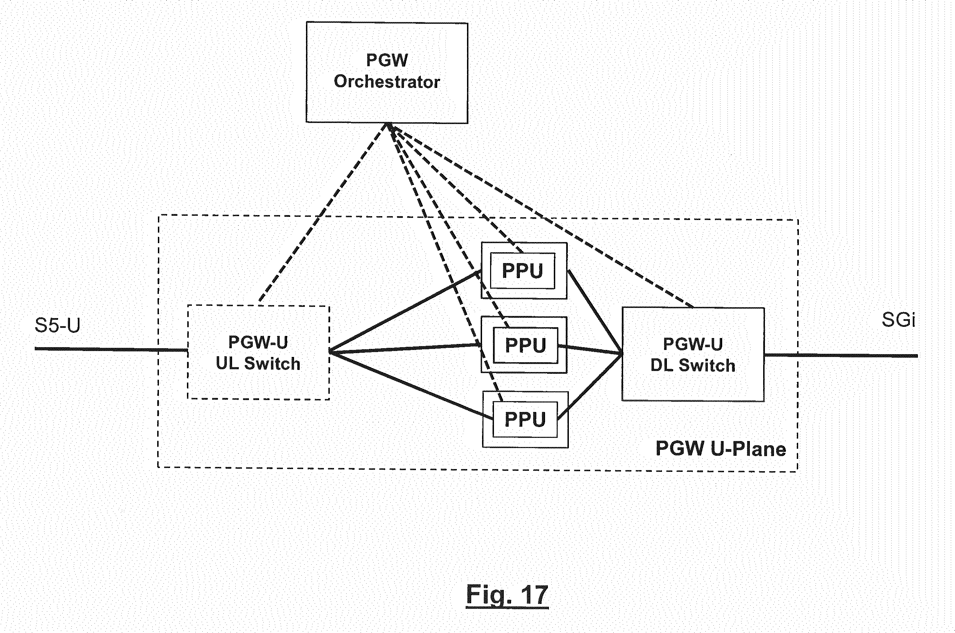

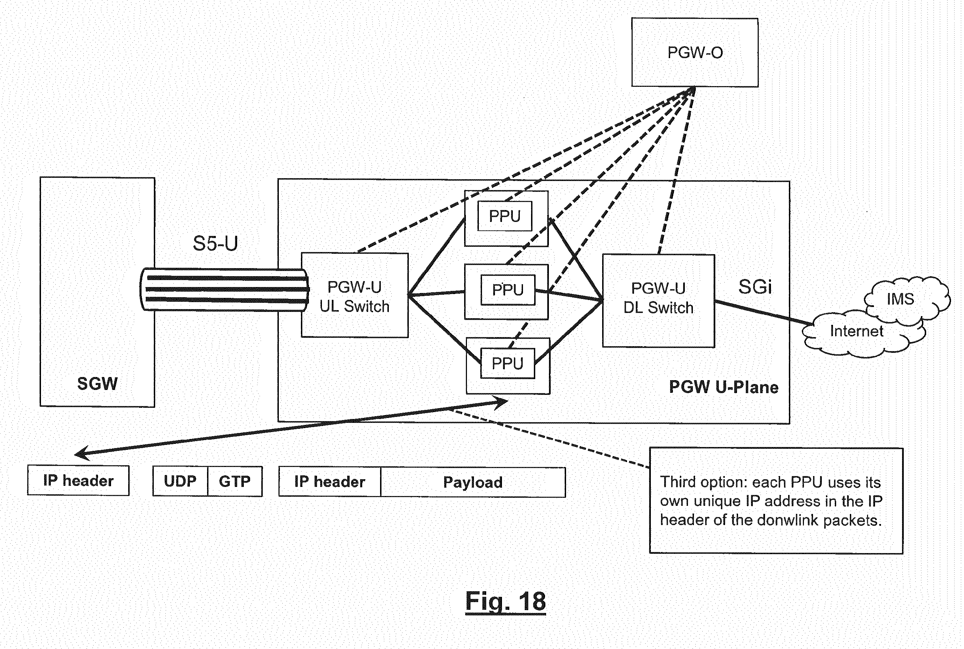

A further third implementation option of the overall architecture is shown in Figure 17, which will be described in the following: The main difference between the architectures of Figure 16 and Figure 17 is the way how the PPU interconnects with the SGW for the case of decoupled PGW and SGW on the data plane and the corresponding setting and usage of IP addresses. The fundamental difference of the third option is that each PPU, when communicating with the SGW/eNB uses its own, unique IP address as source address on the data plane when sending packets. This is illustrated in Fig. 18. It should be noted that the PPU might directly communicate with the eNB in case the PPU also implements the functions of the SGW and the PPU has thus the combined S/P-GW functionality.

The effect of this difference of the third implementation option is as follows: The cluster structure of the PGW is exposed to the interior of the network (mobile core network), as each PPU can be addresses directly. The benefit is that the GTP packets transmitted on the S5-U interface can be routed to a certain PPU according to its own IP address. A white-dotted box is used in in Figure 17 to represent the PUS, because in this architecture, it becomes a non-compulsory component in the overall system. The PUS can be a standard off-the-shelf router or OpenFlow switch which is integrated with the data centre networks and controlled by the Cloud Management System (CMS) of the data centre. In this case (case A), an interface to the orchestrator is not necessary.

In certain circumstances however (case B), for instance when the operator prefers to do service dependent uplink switching, then an OpenFlow switch based PUS controller by the orchestrator still is necessary. Such scenarios could be:
1. Resiliency provisioning
   For certain PPUs, a 1 plus 1 hot standby mechanism is preferred to provide high availability for PPUs. In this case, the backup PPU should share the same IP address as the primary PPU in the failure situation, such that the failover mechanism is transparent for the SGW/eNB. Thus, in the failure case when the primary PPU is down, the PGW-O will modify the forwarding table of PUS to switch the flows for the primary PPU to the backup PPU.
2. PPU maintenance and update
   Once the operator needs to maintain or update the software in a PPU, the running bearers in the PPU need to be migrated from one PPU to the other PPU seamlessly. In order to keep this process transparent for the SGW/eNB, the new PPU is preferred to have the same IP address as the old PPU. In this scenario, PUS is also necessary for flow switching.

In the third option, if the PUS is used in the system architecture, it also requires an interface between PUS and the PGW Orchestrator. This interface differs from the interface provided in the first and second implementation option. A short summary of the influence of the third implementation option on the interfaces, IP addressing scheme, and the GW selection process is given in the following table:

| | First and second architecture/implementation option (Figure 16) | Third architecture/implementation option (Figure 17) |
|---|---|---|
| PGW-U UL Switch (PUS) | OpenFlow Switch with GTP read extension | Case A: No PUS in the system |
| | | Case B: There is PUS in the system. The PUS is a commercial off-the-shelf (COTS) OpenFlow Switch. |
| | PUS route GTP traffic to a certain PPU according to TEID. | Case A: GTP traffic is routed to a PPU via datacentre router. |
| | | Case B: PUS route GTP traffic to a certain PPU according to PPU's IP address. |
| IP address of | The entire PGW U-plane has | Each PPU has a unique IP for |
| U-plan | one IP, which is used to let PGW-U to be reached from SGW/eNB. | SGW/eNB to reach. |
| PPU encapsulation function | Encapsulate the received packets from PDS with a GTP header and an IP header, in which the IP source is the PGW-U public IP. | Encapsulate the received packets from PDS with a GTP header and an IP header, in which the IP source is the IP of this PPU. |
| Interface between PUS and PGW-O | PUS has an OpenFlow based interface with PGW-O, by using which, the PGW-O configures the forwarding table at PUS. If the PUS uses TEID to dispatch packets to PPUs, this interface needs to be modified to support TEID matching. | Case A: There is no PUS in the system, therefore, there is also no interface between PUS and PGW-O. |
| | | Case B: PUS has a standard OpenFlow interface with PGW-O. |
| PPU selection by PGW-O | After a tunnel is setup for a bearer, **the IP address of the PGW-U** and the TEID are returned to PGW-C. | After a tunnel is setup for a bearer, **the IP address of the PPU** and the TEID are returned to PGW-C. |

## Claims

1. An apparatus for implementing a packet gateway user plane PGW-U comprising:
a configurator for configuring a plurality of processing components, each acting as a packet processing unit PPU, each PPU implementing the user plane functionality of a PGW for a certain number of parallel sessions called bearers,
a downlink switch which maps IP traffic from an external packet data network PDN to a certain PPU,
an uplink switch which maps GPRS tunnel protocol GTP traffic to a certain PPU,
said configurator being adapted to configure said PPUs, the uplink switch and the downlink switch such that uplink and downlink traffic pertaining to a specific bearer are routed through a certain PPU.

2. The apparatus of claim 1, wherein said downlink switch is an ordinary OpenFlow enabled switch, wherein the downlink switch maps incoming IP traffic to PPUs based on a five-tuple of information, comprising IP source and destination address as well as source and destination port numbers and a protocol ID.

3. The apparatus of any of the previous claims,
wherein said uplink switch is an OpenFlow enabled switch that reads information from a predetermined area in the GTP header which is within the payload of an incoming IP packet,
wherein the packet is forwarded according to said read information.

4. The apparatus according to claim 3, wherein said read information is a tunnel endpoint identifier TEID.

5. The apparatus of claim 4, wherein said information is obtained by reading and matching certain number of bits from a certain location of the IP packet payload.

6. The apparatus of any of claims 3 to 5, wherein the OpenFlow enabled uplink switch is either enhanced to provide an extension relating to read the GTP header or is capable to read and match a certain number of bits from a certain location within the IP packet payload via bit shifting.

7. The apparatus of claim 1 or 2, wherein said uplink switch is an ordinary OpenFlow switch without extensions relating to GTP, wherein
each PPU uses its own unique IP address as source address when sending packets through the uplink switch and wherein
GTP traffic received by the uplink switch is directly addressed to said unique IP address of a PPU.

8. The apparatus of any of the previous claims, wherein said configurator is configured to perform upon creation of a new bearer:
selecting and assigning an unused TEID for a new GPRS tunnel,
selecting a PPU,
configuring the packet processing related information at the PPU, for instance, the content of GTP header used for encapsulation/decapsulation,
configuring the flow tables of the downlink switch such that incoming traffic (from an external PDN to the evolved packet core network) relating to the bearer is forwarded to the selected PPU, and
configuring the flow tables of the uplink switch such that outgoing GTP traffic, from the evolved packet core network to an external PDN, relating to the bearer is forwarded to the selected PPU.

9. The apparatus of any of the previous claims, wherein said configurator comprises a topology management module configured for
recording all bearers currently setup in the U-plane,
recording all working PPUs,
preferably collecting information about usage and traffic load of the PPUs, creating a new PPU once there are not sufficient PPUs in the resource pool, and preferably deleting a PPU depending on traffic load and usage.

10. The apparatus of any of the previous claims, wherein
said PPU is implemented by one of the following:
a software run on a server;
a software run on a virtual machine.

11. The apparatus of any of the previous claims, wherein
said uplink switch reads the information based on which the GTP packet is forwarded to the PPU without performing a decapsulation of the GTP packet according to the GTP protocol.

12. The apparatus of any of the previous claims, where each PPU can implement the user plane functionality of a PGW or an integrated PGW and SGW.

13. A method for performing the function of a packet gateway user plane (PGW-U) comprising the steps of:
configuring through a configurator a plurality of processing components, each acting as a packet processing unit PPU, each PPU implementing the user plane functionality of a PGW for a certain number of parallel sessions called bearers,
mapping through a downlink switch IP traffic from an external packet data network PDN to a certain PPU,
mapping through an uplink switch GPRS tunnel protocol GTP traffic to a certain PPU,
configuring through the configurator said PPUs, the uplink switch and the downlink switch such that uplink and downlink traffic pertaining to a specific bearer are routed through a certain PPU.

14. A computer program comprising computer program code for enabling said computer to act as an apparatus according to one of claims 1 to 12 or to perform the method according to claims 13.
